(19) Europäisches Patentamt
European Patent Office
Office européen des brevets

(11) **EP 1 780 481 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
**F25C 3/04** (2006.01)

(21) Anmeldenummer: **05023743.7**

(22) Anmeldetag: **31.10.2005**

(54) **Verfahren zur Herstellung von Kunstschnee sowie Schneekanone zur Durchführung des Verfahrens**

Method of making artificial snow and snow gun for carrying out the method

Procédé de fabrication de neige artificielle et un canon à neige pour l'application de ce procédé

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.10.2004 AT 18212004**

(43) Veröffentlichungstag der Anmeldung:
**02.05.2007 Patentblatt 2007/18**

(73) Patentinhaber:
• **Hofer, Gerhard, Dr.**
  **9546 Bad Kleinkirchheim (AT)**
• **Hofer, Dieter, Dipl. Ing.**
  **9064 Pischeldorf (AT)**

(72) Erfinder:
• **Hofer, Gerhard, Dr.**
  **9546 Bad Kleinkirchheim (AT)**
• **Hofer, Dieter, Dipl. Ing.**
  **9064 Pischeldorf (AT)**

(56) Entgegenhaltungen:
**AT-U1- 7 511          AU-A- 3 178 495
DE-A1- 19 962 639   JP-A- 8 110 137**

**Beschreibung**

Die Erfindung betrifft ein Verfahren zu Herstellung von Kunstschnee, bei dem Wasser zerstäubt und $CO_2$-Schnee eingeblasen wird.

Natürlicher Schnee besteht aus winzigen, räumlich verzweigten Eiskristallen, die entlang der hexagonalen Kristallrichtungen, die in der Basisebene des hexagonalen Kristallgitters liegen, sehr schnell gewachsen sind. Der Schmelzpunkt von Eis liegt bei 0°C. Zum Schmelzen von Eis muss Schmelzwärme zugeführt werden. Umgekehrt muss bei der Kristallisation von

Eis und Schnee aus Regentropfen oder Wasser diese Schmelzwärme wieder abgeführt werden.

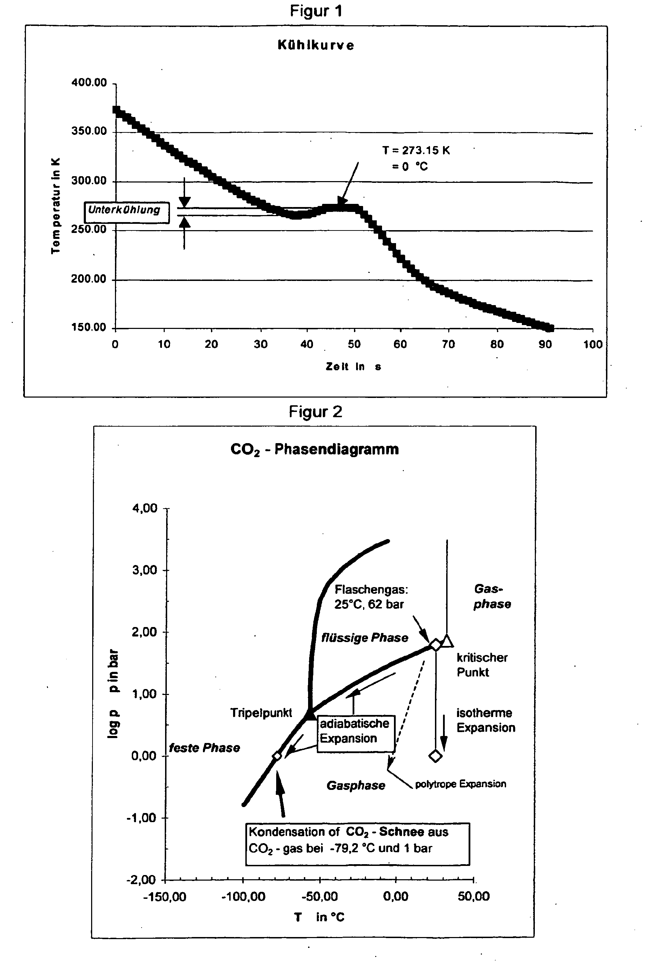

Ein typisches Temperatur - Zeitdiagramm für die Abkühlung von Wasser ist in Figur 1 dargestellt. Zum Abtransport der Schmelzwärme ist eine gewisse **Unterkühlung,** $\Delta T$, unter die Schmelztemperatur notwendig. Nach dem ersten Fourierschen Gesetz fließt die Wärmemenge $\Delta Q$ (in Ws) im Zeitintervall $\Delta t$ (in s) proportional zum Temperaturgradienten $\Delta T/\Delta x$:

$$\frac{\Delta Q}{\Delta t} = -\lambda \cdot A \cdot \frac{\Delta T}{\Delta x}$$

Darin sind $\lambda$ die Wärmeleitfähigkeit (in $WK^{-1}m^{-1}$), A die durchflossene Fläche (in $m^2$), $\Delta T$ die Unterkühlung (in K) und $\Delta x$ der durchflossene Weg (in m). Das heißt, ohne Unterkühlung gibt es keinen Wärmeabfluss.

Kristallisiert dann ein Teil des Volumens des Wassers aus, dann führt die freigesetzte Wärme wieder zur Erwärmung des noch nicht kristallisierten Wassers. Da nur bei der Schmelztemperatur festes und flüssiges Wasser im thermodynamischen Gleichgewicht sind, führt eine Überschreitung der Schmelztemperatur zum Wiederaufschmelzen des bereits gebildeten Eises. Dies drückt sich in der Ausbildung eines Plateaus in der Abkühlkurve aus.

Die Unterkühlung des flüssigen Wassers wird aber auch durch seine beobachtete Trägheit zur Kristallisation gefördert. Der Grund dafür liegt wahrscheinlich darin, dass das Wasser ohnehin schon eine der festen Phase sehr ähnliche Gitterstruktur (Glasstruktur) besitzt und der Transport von Atomen (Diffusion) bei tieferen Temperaturen immer schwieriger wird. Ein etwa 1l Wasservolumen zeigt Unterkühlungen bis zu Temperaturen um -10°C. Kleinere Wassermengen (Zehntelgrammbereich) lassen sich bis -33°C, noch kleinere Mengen bis -70°C unterkühlen Literatur (A). Diese Kristallisation ohne Fremdkristalle wird als homogene Kristallisation bezeichnet.

Die Anwesenheit von kleinen sub-mikroskopischen Kernen fördert die Kristallisation und erhöht die Kristallisationstemperatur. In der Natur führt das dazu, dass die vorhandenen kristallinen Gefrierkerne (Staubteilchen) die Schneebildung bei etwa -4°C bewirken. Die Kristallisation mit Hilfe von winzigen fremden Kristallen bezeichnet man als heterogene Kristallisation.

Es gibt noch eine Methode der Einbringung von Kristallisationskeimen in das unterkühlte Wasser, die darin besteht, Pulver aus $H_2O$ - Eiskristallen einzublasen. Dies wäre dann Kristallisation mit Hilfe der Epitaxie, bei der der Samenkristall die selbe Struktur hat wie der ausgewachsene Kristall.

Die Produktion von künstlichem Schnee mittels Schneemaschinen aus natürlichem Wasser ohne künstliche Zusätze ist erst, abhängig von der relativen Luftfeuchtigkeit bei Temperaturen unter -4°C möglich. Eine Zusammenfassung der verschiedenen Methoden der Herstellung von künstlichem Schnee, einschließlich kryogener Methoden findet man in einem Buch von H. Fuhrmann Literatur (B).

Zur Zeit gibt es noch keine umweltfreundliche Methode, die Schneebildung zu Temperaturen über -4°C zu verschieben.

Für die kryogene Herstellung von Kunstschnee Literatur (B) werden hauptsächlich die verflüssigten Gase $N_2$ und $CO_2$ eingesetzt. Da $CO_2$ preiswert ist und außerdem noch für die Kunstschneebildung interessante Eigenschaften hat, sollen diese Eigenschaften anhand eines Phasendiagrammes von $CO_2$ (siehe Figur 2) diskutiert werden.

In diesem Phasendiagramm sieht man im wesentlichen 3 starke Linien, die zum Tripelpunkt führen. Sie begrenzen die Phasenbereiche feste Phase, flüssige Phase und gasförmige Phase als Funktion von Temperatur und Druck. Entlang dieser Linien sind jeweils 2 Phasen im Gleichgewicht. Es kann entlang dieser Linien nur eine Variable, Temperatur oder Druck verändert werden. Die andere stellt sich automatisch ein.

Verfolgt man zum Beispiel die Gleichgewichtslinie zwischen der flüssigen und gasförmigen Phase, findet man den Zustand, der im Flaschengas herrscht. Das sind etwa 62 bar bei 25°C. Verdampft man nun das flüssige Gas sehr langsam, so dass die notwendige Wärme für die Ausdehnung des Gases von außen zugeführt werden kann (isotherme Ausdehnung), dann bleibt der Druck von 62 bar in der Gasflasche so lange erhalten, wie Flüssigphase vorhanden ist. Erst nach dem Verdampfen des letzten Flüssiggasmoleküls kann der Druck auf den Umgebungsdruck abfallen.

Gibt es keine Wärmezufuhr (adiabatische Bedingung) bei der Entspannung, dann kühlt sich das Gemisch aus flüssigem und gasförmigen $CO_2$ zunächst bis zum Tripelpunkt (-56,6 °C, 5,2 bar) ab. Bei diesem Punkt sind die drei Phasen Flüssigphase, Festphase und Gasphase im Gleichgewicht. Es gibt keinem Freiheitsgrad mehr. Druck und Volumen sind fixiert. Bei dieser Temperatur verharrt das Gas beim weiteren Entspannen, bis das Flüssiggas vollständig verdampft ist. Bei der noch weiteren Entspannung bis auf Atmosphärendruck steht das $CO_2$ - Gas mit $CO_2$ - Festphase ($CO_2$ - Schnee) im Gleichgewicht und kühlt sich bis zum Erreichen des Atmosphärendruckes von 1 bar auf -79,2 °C ab. Es kondensiert der $CO_2$ - Schnee direkt aus der Gasphase.

Wird dem Gas jedoch bei der Entspannung Wärme zugeführt, aber nicht genug, um den isothermen Zustand zu erreichen, dann liegt der Entspannungsweg irgendwo zwischen Adiabate und Isotherme. Man nennt das polytrope Entspannung.

Es gibt Patentanmeldungen Literatur (C, D) über Schneemaschinen, bei denen flüssiges $CO_2$ direkt in eine Zerstäuberkammer (Hochdruckbereich des Wasser - Luftgemisches) eingespritzt wird. Eine andere benutzt eine Vorkammer Literatur (E), die allerdings erfindungsgemäß *im thermischen Kontakt* mit dem zu versprühenden Wasser steht Das expandierende Gemisch aus flüssigem $CO_2$ und $CO_2$ - Gas wird von der Vorkammer aus in den unmittelbar angrenzenden Hochdruckbereich der Zerstäuberdüsen eingeblasen. Dabei soll das zu versprühende Wasser gekühlt werden, in dem es seine Wärme an das $CO_2$-Flüssiggas-Gasgemisch abgibt.

Die Bildung von $CO_2$ - Schnee nach den oben erwähnten Verfahren ist aus zwei Gründen unwahrscheinlich:

## 1. Wärmebalance $H_2O$ - $CO_2$

In Gegenwart von Wasser, wird diesem bei der Abkühlung durch das sich ausdehnende $CO_2$ Wärme entzogen und dem $CO_2$ - Gas zugeführt. Dadurch wird die für die $CO_2$ - Schneebildung notwendige adiabatische Abkühlung auf -79,2 °C verhindert. Zur quantitativen Abschätzung der Wärmegleichgewichte zwischen $H_2O$ und $CO_2$ wird eine einfache Wärmebilanz durchgeführt:

*Annahme:*

1 Mol $CO_2$ sei durch adiabatische Expansion auf - 80 °C abgekühlt und gleichzeitig 1 Mol $H_2O$ wegen der schlechten Wärmeübertragung nur auf - 27 °C, keine Phasenumwandlungen.

*Ergebnis:*

Die beim Abkühlen des Wassers von 0 auf - 27°C frei werdende Wärme kann das $CO_2$ - Gas von - 80 °C auf - 27 °C erwärmen.

Bei dieser Rechnung ist die bei einer eventuellen Kristallisation frei werdende Schmelzwärme von Wassereis von 6012 J/mol noch nicht berücksichtigt.

Würde die Schmelzwärme mitberücksichtigt, dann würde diese Wärmemenge ausreichen, um das $CO_2$ auf +26°C zu erwärmen.

Diese Rechnung zeigt, dass das Wasser eine Wärmequelle ist, die die Bildung von festen $CO_2$ - Kristallen unwahrscheinlich macht.

## 2. Die chemische Reaktion zwischen $CO_2$ und $H_2O$

Es ist aus der Chemie bekannt Literatur (F), dass $CO_2$ mit $H_2O$ zu Kohlensäure reagiert.

*Frage:*

Welche Spezies und welche Wärmemengen (positiv oder negativ) entstehen, wenn 1 Mol $CO_2$ (300 K, 59 bar) mit $H_2O$(300K, 1 bar) reagiert?

*Ergebnis*

Die Berechnung wurde mit Hilfe des Programmpaketes CHEMSAGE der Fa. GTT TECHNOLOGIES (7) durchgeführt.

$$T = 300.00 \ \kappa$$
$$P = 5.90000E+01 \ bar$$
$$V = 4.07863E-01 \ dm3$$

(fortgesetzt)

| STREAM CONSTITUENTS | AMOUNT/mol |
|---|---|
| CO2/GAS/ | 1.0000E+00 |
| H2O/AQUEOUS/ | 1.0000E+00 |

| PHASE: GAS | EQUIL AMOUNT | MOLE FRACTION | FUGACITY |
|---|---|---|---|
| | mol | | bar |
| CO2 | T 9.6422E-01 | 9.9947E-01 | 5.8969E+01 |
| H2O | T 5.1004E-04 | 5.2868E-04 | 3.1192E-02 |
| H2 | T 5.9443E-30 | 6.1616E-30 | 3.6354E-28 |
| 02 | T 3.0304E-30 | 3.1412E-30 | 1.8533E-28 |
| CO | T 1.1645E-31 | 1.2071E-31 | 7.1218E-30 |
| TOTAL: | 9.6473E-01 | 1.0000E+00 | 1.0000E+00 |
| PHASE: AQUEOUS | mol | MOLALITY | ACTIVITY |
| H2O | T 9.9947E-01 | 5.5508E+01 | 9.6482E-01 |
| H<+> | T 1.8336E-05 | 1.0183E-03 | 9.8178E-04 |
| OH<-> | T 2.2557E-13 | 1.2528E-11 | 1.2080E-11 |
| HCO3<-> | T 1.8336E-05 | 1.0183E-03 | 9.6178E-04 |
| C03<2-> | T 1.1101E-12 | 6.1654E-11 | 5.3028E-11 |
| CO2(AQ) | T 3.5757E-02 | 1.9859E+00 | 1.9859E+00 |
| TOTAL: | 1.0353E+00 | | 1.0000E+00 |

| Cp_EQUIL | H_EQUIL | S_EQUIL | G_EQUIL | V_EQUIL |
|---|---|---|---|---|
| J.K-1 | J | J.K-1 | J | dm3 |
| 1.88366E-05 | -6.31224E+05 | -3.25751E+01 | -6.21451E+05 | 4.07863E-01 |

pH = 3.0080
Eh/V = 0.6376
Total solute molality = 1.9879
Ionic strength = 0.0010
Osmotic coefficient = 1.0000
Debye-Hueckel slope = 0.3916

Mole fraction of the system components:

| | GAS | AQUEOUS |
|---|---|---|
| C | 3.3316E-01 | 1.1519E-02 |
| O | 6.6649E-01 | 3.4485E-01 |
| H | 3.5245E-04 | 6.4363E-01 |

Data on 11 constituents marked with 'T' are extrapolated outside their valid temperature range
T = 300.00 κ
P = 5.90000E+01 bar
V = 4.07863E-01 dm3

| STREAM CONSTITUENTS | AMOUNT/mol |
|---|---|
| CO2/GAS/ | 1.0000E+00 |
| H2O/AQUEOUS/ | 1.0000E+00 |

(fortgesetzt)

| PHASE: GAS | EQUIL AMOUNT mol | MOLE FRACTION | FUGACITY bar |
|---|---|---|---|
| CO2 | T 9.6422E-01 | 9.9947E-01 | 5.8969E+01 |
| H2O | T 5.1004E-04 | 5.2868E-04 | 3.1192E-02 |
| H2 | T 5.9443E-30 | 6.1616E-30 | 3.6354E-28 |
| O2 | T 3.0304E-30 | 3.1412E-30 | 1.8533E-28 |
| CO | T 1.1645E-31 | 1.2071E-31 | 7.1218E-30 |

Im obigen Ergebnisausdruck sieht man, dass als Reaktionsprodukte neben Wasser in signifikanter Menge nur die folgenden 3 Spezies in der wässrigen Phase gebildet werden:

$H^{<+>}$ - Ionen $\qquad$ = 1,8336 $10^{-5}$ mol

$HCO_3^{<->}$ - Ionen $\qquad$ = 1,8336 $10^{-5}$ mol

$CO_2(AQ)$ in Wasser gelöstes Kohlendioxid = 3,575 $10^{-2}$ mol

Bei dieser Reaktion wird auch eine sehr große Wärmemenge von 6,31 x $10^5$ J / mol freigesetzt. Dies beeinträchtigt natürlich auch den Abkühleffekt beim Einspritzen von flüssigem Kohlendioxid in Wasser.

Schließlich kann man aus der bei dieser Reaktion entstehende Masse an $H^{<+>}$ - Ionen von 1,8336 x $10^{-5}$ mol einen pH - Wert von ungefähr 3 errechnen.

Ein Prozess, der eine so starke Säure produziert, dürfte kaum genehmigungsfähig sein. Dies steht im krassen Gegensatz zu dem in dieser Arbeit vorgestellten Verfahren **(Hofer-Snow)**, bei dem die Menge an eingebrachtem $CO_2$ im Verhältnis zur Gesamtmenge an $H_2O$ verschwindend gering ist.

Wie bereits angedeutet, existiert $CO_2$ - Schnee bei etwa -79 °C solange, bis das letzte Molekül dieser Festphase verdampft ist. Wegen der hohen Verdampfungswärme von $CO_2$ - Schnee (25218 joule/mol) und seiner schlechten Wärmeleitfähigkeit ist er auch verhältnismäßig stabil. Zu $CO_2$Trockeneis gepresster $CO_2$ - Schnee kann tagelang bei Raumtemperatur lagern. Mit einer Mischung aus Äther + $CO_2$ - Schnee kann man ein Kältebad von - 100 °C einstellen. Um das verdampfende Gas von -79,2 auf 0 °C zu erwärmen, wären noch zusätzlich 3021 joule/mol erforderlich. Damit könnte 1 mol $CO_2$ -Schnee 4,7 mol, d.h. fast 5 mol $H_2O$ die Schmelzwärme entziehen. Weitere Gründe für die Eignung von $CO_2$ - Schnee als Kristallisationskeim von $H_2O$ liegen in der Atomstruktur und der Morphologie der beiden Kristall- gitter. Die Atomstruktur von $CO_2$ basiert auf $CO_4$ - Tetraedern, die von $H_2O$ auf $H_4O$-Tetraedern. $CO_2$ wirkt daher nicht nur als heterogener Keimbildner, sondern auch als quasi - homogener. Durch seinen flockenförmigen Habitus kann der $CO_2$-Schnee die Wassertröpfchen zur Flockenbildung anregen. Nach der Kristallisation verdampft das feste $CO_2$ ohne Rückstände in Atmosphäre, aus der es ursprünglich entnommen wurde. Wegen der großen Kälte der $CO_2$ - Kristalle reagieren sie auch chemisch praktisch nicht mit dem Wasser.

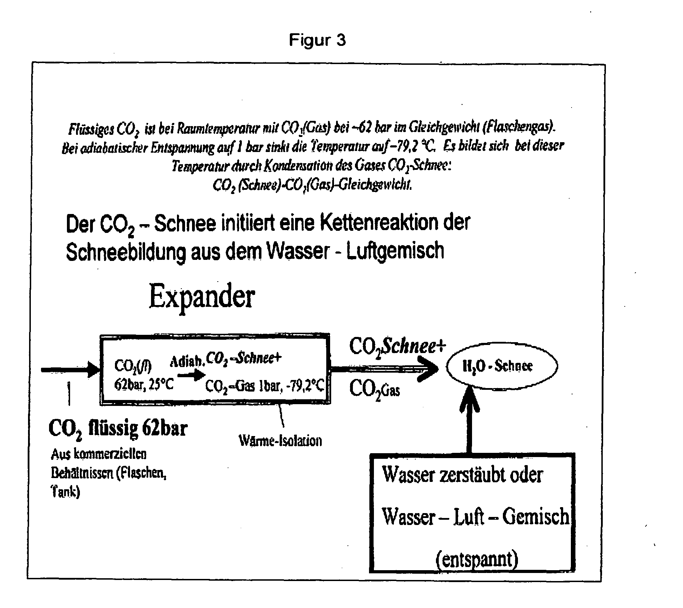

Die Idee dieser Erfindung liegt nun darin, flüssiges $CO_2$ oder ein Gemisch aus flüssigem und gasförmigem $CO_2$ **nicht** in den Hochdruckbereich des $H_2O$ - Zerstäubungsraumes einzuspritzen, sondern mit dem $CO_2$ - Flüssiggas oder Flüssiggas -Dampfgemisch in einem **eigenen thermisch getrennten, isolierten wasser- und gasdichten Expander,** unbeeinflusst von der $H_2O$ - Zerstäubung, gesichert $CO_2$ - Schnee zu erzeugen und dann über eine eigene thermisch isolierte Leitung in den Bereich des Luft - Wassernebels mit der höchsten Unterkühlung einzublasen. Der optimale Einblaspunkt oder die optimalen Einblaspunkte sind von Fall zu Fall experimentell zu bestimmen. Die Lösung, $CO_2$ - Schnee vor Ort aus Flüssiggas zu erzeugen, scheint heute die praktikabelste zu sein. Prinzipiell könnte $CO_2$ - Schnee auch zentral hergestellt und über eigene isolierte Leitungen zu den Schneemaschinen transportiert werden. Flüssiggas kann übrigens auch entweder aus Flaschen oder über eine Leitung aus einer zentralen Versorgungsstelle zum jeweiligen Expander gebracht werden (siehe Figur 3).

Das Expandersystem zur $CO_2$-Schneeerzeugung kann in bestehende Schneemaschinen oder Konstruktionen neuer Schneemaschinen integriert (siehe Patentanspruch 3) oder als selbständige Einheit gebaut und den bestehenden Schneemaschinen beigestellt werden.

Es soll hier noch einmal betont werden dass mit dem hier vorgeschlagenen Verfahren das zu zerstäubende Wasser nicht kryogen gekühlt werden soll. Der Kryogen - Effekt beschränkt sich hier auf das Tröpfchen, in dem die Kristallisation angeregt werden soll. Die durch das hier beschriebene Verfahren verursachte Erhöhung der $CO_2$ - Konzentration des erzeugten $H_2O$ -Schnees soll unter 1 ppm liegen.

Sobald die Schneemaschine oder deren Nukleator - Düsen zur Schneeerzeugung angeregt sind, soll die $CO_2$ - Schneeerzeugung automatisch abgeschaltet werden (siehe Patentanspruch 2). Es ist bekannt, dass bereits laufende Schneemaschinen auch bei steigenden Außentemperaturen Schnee erzeugen.

Literatur:

(A) R. W. Pohl, Mechanik, Akustik und Wärmelehre, Springer Verlag, Berlin (1959), S. 271

(B) H. Fuhrmann, Basisschnee, Steidl Verlag, Salzburg (1996)

(C) Shoji, K. Shinji, C. Makoto und Toshiyasu, Apparatus and method for making Artificial snow, Japanese Patent Application No. 08022238 Date of Filing: 08.02.96

(D) P. Bauer, M. Girth, Inventors, Vorrichtung und Verfahren zur Erzeugung von Kunstschnee, Offenlegungsschrift No. DE 199 62 639 A1, Bundesrepublik Deutschland, Anmeldetag: 23. 12. 1999 Offenlegungstag: 19. 07. 2001

(E) M. L. Kirk and S. D. Kemp, Inventors, Snowtech Holdings PTY LTD, Applicant, Method and Apparatus for the production of artificial sow, Australian Patent Office, Application NO. 31784/95, Document No.: AU-A-31784/95 Application Date: 23.09.94

(F) A.F. Hollemann und E. Wiberg, Lehrbuch der anorganischen Chemie, Walter de Gruyter Verlag, 1964, S. 306

(G) Programmpaket CHEMSAGE Version 3.0.1 GTT - Technologies, Kaiserstr. 100, 52134 Herzogenrath 3, Germany

**Patentansprüche**

1.  Verfahren zur Herstellung von Kunstschnee, bei dem Wasser zerstäubt und $CO_2$-Schnee eingeblasen wird, **dadurch gekennzeichnet, dass** flüssiges $CO_2$ räumlich und thermisch getrennt vom Wasser durch eine wärmeisolierte Rohr- und oder Schlauchleitung in einen Expander beziehungsweise Kristallisationkammer eingeblasen wird, wo durch adiabatische Entspannung zuerst aus der Flüssigphase gasförmiges $CO_2$ und bei weiterer Abkühlung des Gases durch adiabatische Entspannung Kristalle aus festem $CO_2$ in der Form von $CO_2$ -Schnee entstehen, und dass erst danach dieser $CO_2$-Schnee mit dem Wasser-bzw. Wasser-Luft-Gemisch in dessen vollständig entspannten kältesten Bereich der experimentell zu bestimmen ist, zusammengeführt wird.

2.  Verfahren nach Anspruch 1, **dadurch gekennzeichnet, dass** man die Zufuhr von $CO_2$ stoppt, sobald genügend Kristallisationskeime vorhanden sind, und erst dann wieder $CO_2$ Schnee einbläst, wenn neue Kristallisationskeime benötigt werden:

3.  Schneekanone zur Durchführung des Verfahrens nach Anspruch 1 oder 2, mit einem rohrförmigen Gehäuse, in dem ein Ventilator angeordnet ist und in dem Düsen zum Einspritzen von Wasser oder eines Wasser-Luft-Gemischs vorgesehen sind, wobei weiters zumindest eine Düse zum Einblasen von $CO_2$ Schnee vorgesehen ist, **dadurch gekennzeichnet, dass** zumindest einen Expander beziehungsweise Kristallisationskammer thermisch getrennt vom Wasser vorgesehen ist, wo aus flüssigem $CO_2$ durch adiabatisches Entspannen $CO_2$ Schnee erzeugt und über ein thermisch isoliertes Rohr- und/oder Schlauchsystem in den im rohrförmigen Gehäuse erzeugten Wasser-Luft Gemisch-Nebel in dessen vollständig entspannten kältesten Bereich eingeblasen wird.

**Claims**

1.  Process for the production of artificial snow where water is atomized and injected with $CO_2$-snow where liquid $CO_2$ which is positionally and thermally isolated from the water by a thermally insulated pipe or tube is injected into an expansion or crystallization chamber, respectively. By adiabatic expansion, gaseous phase is formed from the liquid phase and after further cooling of the gas by adiabatic expansion, crystals of solid $CO_2$ appear in the form of $CO_2$-snow which is then injected into the coldest Area of the water- and water-air mixture, respectively, which has to be determined experimentally.

2.  According to claim 1, the process is **characterized by** stopping the $CO_2$ - flux as soon as there are sufficient nuclei

available and $CO_2$-snow is only added when new nuclei are needed.

3. Snow-gun for executing the process according to the claims 1 and 2 with a tubular casing where a fan is located and also jets for the injection of water and water-air-mixtures are and at least one jet for the injection of $CO_2$-Snow are planned and is **characterized by** including at least one expander or crystallization chamber, respectively, which is thermally isolated, from the water, where it is intended to make $CO_2$-snow by adiabatically expanding liquid $CO_2$ and to blow it through a thermally insulated pipe or tube system into the fully decompressed coldest zone of water-air-fog generated in the tubular casing.

## Revendications

1. Procédé de production de neige artificielle par vaporisation d'eau et injection de neige $CO_2$ **caractérisé par** l'injection, dans un extenseur respectivement une chambre de cristallisation, de $CO_2$ liquide, localement et thermiquement séparé de l'eau, et où, par détente adiabatique, naissent, en un premier temps à partir de la phase liquide du $CO_2$ gazeux et, par refroidissement continu du gaz par détente adiabatique, des cristaux de $CO_2$ solide sous forme de neige $CO_2$ et que c'est seulement après que cette neige $CO_2$ est réunie avec ce mélange d'eau respectivement d'eau-air dans son secteur le plus froid, complètement détendu, qui doit être déterminé par expérimentation.

2. Procédé d'après revendication 1, **caractérisé par le fait que** l'on arrête l'arrivage du $CO_2$ dès qu'il y a assez de germes de cristallisation et que l'on injecte la neige $CO_2$ seulement au moment où l'on à besoin de nouveaux germes de cristallisation.

3. Canon à neige pour l'application du procédé selon revendication 1 ou 2 avec un élément tubulaire dans lequel est positionné un ventilateur et où des jets d'eau servant à l'injection d'eau ou d'un mélange eau-air, et où au moins un jet d'eau pour l'injection de neige $CO_2$ est prévu, **caractérisé par le fait qu'**au moins un extenseur respectivement une chambre de cristallisation, séparé thermiquement de l'eau, est prévu, où, à partir de $CO_2$ liquide, par détente adiabatique, la neige $CO_2$ est produite et injectée, par un système tubulaire et/ou élastique, isolé thermiquement, dans le brouillard de mélange eau-air, produit dans l'élément tubulaire, dans son secteur le plus froid, entièrement détendu.

## Figur 1

**Kühlkurve**

*Unterkühlung*

T = 273.15 K
= 0 °C

## Figur 2

**CO₂ - Phasendiagramm**

Flaschengas:
25°C, 62 bar

*Gas-phase*

*flüssige Phase*

kritischer
Punkt

Tripelpunkt

adiabatische
Expansion

isotherme
Expansion

*feste Phase*

*Gasphase*

polytrope Expansion

Kondensation of CO₂ - Schnee aus
CO₂ - gas bei -79,2 °C und 1 bar

Figur 3

*Flüssiges $CO_2$ ist bei Raumtemperatur mit $CO_2$(Gas) bei ~62 bar im Gleichgewicht (Flaschengas). Bei adiabatischer Entspannung auf 1 bar sinkt die Temperatur auf -79,2 °C. Es bildet sich bei dieser Temperatur durch Kondensation des Gases $CO_2$-Schnee: $CO_2$ (Schnee)-$CO_2$(Gas)-Gleichgewicht.*

## Der $CO_2$ – Schnee initiiert eine Kettenreaktion der Schneebildung aus dem Wasser - Luftgemisch

### Expander

$CO_2$(fl) Adiab. $CO_2$-Schnee+
62bar, 25°C → $CO_2$-Gas 1bar, -79,2°C

$CO_2$Schnee+
$CO_2$Gas

$H_2O$ - Schnee

**$CO_2$ flüssig 62bar**
Aus kommerziellen Behältnissen (Flaschen, Tank)

Wärme-Isolation

Wasser zerstäubt oder
Wasser – Luft – Gemisch
(entspannt)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 08022238 B
- DE 19962639 A1
- AU 3178495
- AU 3178495 A

**In der Beschreibung aufgeführte Nicht-Patentliteratur**

- **R. W. POHL.** Mechanik, Akustik und Wärmelehre. Springer Verlag, 1959, 271
- **H. FUHRMANN.** Basisschnee. Steidl Verlag, 1996
- **A.F. HOLLEMANN ; E. WIBERG.** Lehrbuch der anorganischen Chemie. Walter de Gruyter Verlag, 1964, 306